(19) **Europäisches Patentamt**
**European Patent Office**
**Office européen des brevets**

(11) **EP 3 841 554 B1**

(12) **EUROPEAN PATENT SPECIFICATION**

(45) Date of publication and mention
of the grant of the patent:
**18.12.2024 Bulletin 2024/51**

(21) Application number: **19753429.0**

(22) Date of filing: **06.08.2019**

(51) International Patent Classification (IPC):
**G06T 5/77** $^{(2024.01)}$

(52) Cooperative Patent Classification (CPC):
**G06T 5/77**; G06T 2207/10028

(86) International application number:
**PCT/GB2019/052199**

(87) International publication number:
**WO 2020/039166 (27.02.2020 Gazette 2020/09)**

(54) **METHOD AND SYSTEM FOR RECONSTRUCTING COLOUR AND DEPTH INFORMATION OF A SCENE**

VERFAHREN UND SYSTEM ZUR REKONSTRUKTION VON FARB- UND TIEFENINFORMATIONEN EINER SZENE

PROCÉDÉ ET SYSTÈME PERMETTANT DE RECONSTRUIRE DES INFORMATIONS DE COULEUR ET DE PROFONDEUR D'UNE SCÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2018 GB 201813752**

(43) Date of publication of application:
**30.06.2021 Bulletin 2021/26**

(73) Proprietors:
• **Sony Interactive Entertainment Inc.**
**Tokyo 108-0075 (JP)**
• **Sony Interactive Entertainment Europe Limited**
**London W1F 7LP (GB)**
Designated Contracting States:
**AL**

(72) Inventors:
• **CAPPELLO, Fabio**
**London W1F 7LP (GB)**
• **WILLIAMS, Nigel John**
**London W1F 7LP (GB)**

(74) Representative: **D Young & Co LLP**
**3 Noble Street**
**London EC2V 7BQ (GB)**

(56) References cited:
**EP-A1- 2 933 778      EP-A1- 3 139 602**
**US-A1- 2012 001 902**

• **DAVID WOLINSKI ET AL: "3D view synthesis with inter-view consistency", PROCEEDINGS OF THE 21ST ACM INTERNATIONAL CONFERENCE ON MULTIMEDIA, MM '13, 2013, New York, New York, USA, pages 669 - 672, XP055303740, ISBN: 978-1-4503-2404-5, DOI: 10.1145/ 2502081.2502175**
• **YINDA ZHANG ET AL: "Deep Depth Completion of a Single RGB-D Image", ARXIV.ORG, CORNELL UNIVERSITY LIBRARY, 201 OLIN LIBRARY CORNELL UNIVERSITY ITHACA, NY 14853, 25 March 2018 (2018-03-25), XP081232796**

**Description**

BACKGROUND OF THE INVENTION

Field of the invention

The present disclosure relates to a method and system for reconstructing colour and depth information of a scene.

Description of the Prior Art

There exist a number of ways in which a scene may be reconstructed graphically in three-dimensions (3D). One of these methods involves capturing a point cloud of the scene and converting the point cloud into a polygon or triangle mesh, so as to perform surface reconstruction. If a corresponding colour image of the same scene is captured, then the colour of the reconstructed surfaces can be matched to the corresponding surfaces in the colour image. In this way, a 3D graphical representation of the scene can be reconstructed.

However, reconstructing scenes in this way can be problematic. In some cases, objects in the scene may be occluded by other objects, thus preventing colour and depth information for those objects from being obtained. Thus, if a viewer wishes to view the graphical representation of the scene from a different viewpoint, there may parts of the scene for which depth and colour data is missing. These occluded objects may thus appear incomplete in the 3D reconstruction, if visible at all.

Generally, this problem can be overcome by capturing multiple colour and depth images of the scene, each from a different viewpoint, and combining them. As will be appreciated, this can be a somewhat time-consuming, if not labour-intensive process.

In some known methods, machine learning or analytical methods are used to recover colour and depth information from an existing colour and depth image pair. However, even for these methods, the reconstructed colour and depth information is often inaccurate for any occluded objects in the scene. Previously proposed arrangements are disclosed in EP 2 933 778 A1, US 2012/001902 A1, EP 3 139 602 A1 and Wolinsky et al., "3D view synthesis with interview consistency", Proceedings of 21st ACM International Conference on Multimedia MM'13, pages 669-672.

The present invention thus seeks to mitigate these problems.

SUMMARY OF THE INVENTION

According to a first aspect disclosed herein, there is provided a method of reconstructing colour and depth information of a scene according to claim 1.

According to a second aspect disclosed herein, there is provided a system for reconstructing colour and depth information of a scene according to claim 12.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Figure 1 shows schematically an example of an environment in which multiple images of a user are captured from different respective viewpoints;
Figure 2 shows schematically an example of a method for reconstructing colour and depth images in accordance with the present invention; and
Figure 3 shows schematically an example of a system in accordance with the present invention.

DESCRIPTION OF THE EMBODIMENTS

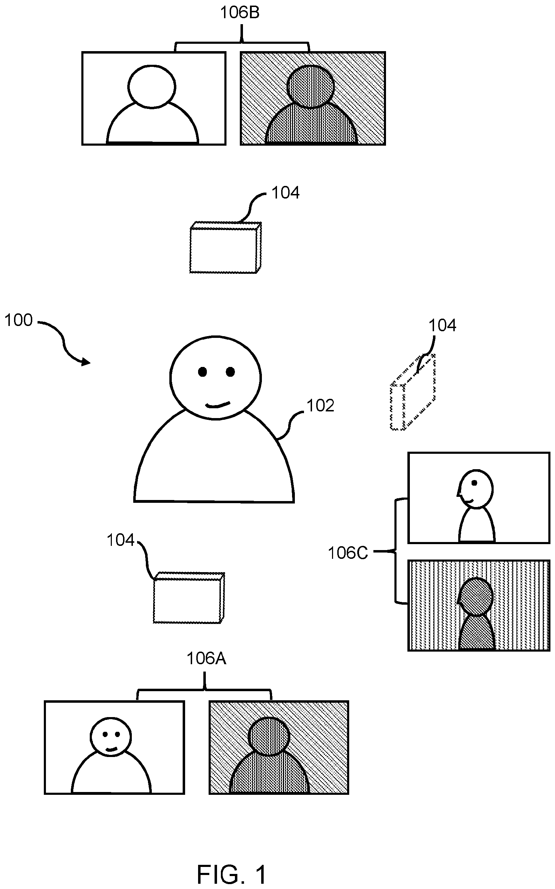

Referring now to the drawings, wherein like reference numerals designate identical or corresponding parts throughout the several views, Figure 1 shows schematically an example of a scene 100 in which a user 102 is located, and in which the present invention may be used.

In Figure 1, a camera 104 is shown as having a first position and orientation relative to the user. The camera may be operable to capture a colour image of the scene and a depth image of the scene. In some examples, the colour and depth cameras may be incorporated into a single device, such as a smartphone. In other examples, they may be physically separate from one another.

The colour camera may include a colour sensor for detecting frequencies of visible light impinging on the sensor, from the external environment. As is known in the art, colour sensors comprise a plurality of pixels for receiving visible light at particular frequencies and detecting the intensity of the received light. The intensities of light detected at the different frequencies can then be combined to generate a colour image of the scene.

The depth camera may include a depth sensor for detecting the distance of a plurality of points in the scene, relative to the plane defined by the depth sensor. The depth camera may be operable and arranged to emit a signal, and receive a reflection of that signal, thereby enabling the depth to be inferred from the signal's time-of flight. Alternatively, the depth camera may be configured to emit a patterned signal, such as a uniform grid of e.g. infra-red light, and to receive a reflection that signal. Depth information may then be determined based on any distortions in the reflected signal received at the depth sensor. The depth camera may be, for example, a Kinect™ device. Other examples of depth cameras are not excluded.

In some examples there may be no depth camera, and the colour camera may be configured to generate stereoscopic images of the scene. For example, the colour camera may comprise two or more lenses with a separate image sensor or film frame for each lens. Alternatively, two separate colour cameras may be used, and the images captured by each combined so as to form a stereoscopic image. The depth information of the scene may then be obtained from the stereoscopic images using e.g known computer stereo vision techniques.

It will be appreciated that, in embodiments where a separate colour and depth camera is used, the respective images captured by the cameras may not have an exact correspondence. For example, the depth camera may have a lower resolution (in terms of captured data points) than the colour camera. In addition, one of the cameras may have a different focal length than the other, and have a different spatial position and /or orientation. In any case, for the embodiments described herein, the colour and depth cameras are arranged such that, for a given viewpoint, there is at least some, if not substantial overlap between the portions of the scene captured by each respective camera. In some embodiments, it may be that the colour and depth images need to be processed, in order to determine corresponding locations in each of the captured images. This may be achieved, for example, by identifying common objects in the colour and depth images, and determining, based on e.g. the focal length and pose of each camera, corresponding points in each of the images.

In yet further or alternative embodiments there may be no colour and / or depth camera. For example, the colour image may be of a virtual environment, and not a real-life physical environment. The colour image may be generated by a game engine of a computing device device, such as a games console. In one example, the game engine may be the 'Unreal Engine'™ developed by 'Epic Games'™. The viewpoint from which the colour image is 'captured' may correspond to the position and orientation of a virtual camera, in the virtual environment, from which the colour image has been generated. The depth image may be generated using the depth buffer of each pixel in the colour image. For these embodiments the object of the invention may be to reconstruct part of a virtual scene from an alternative virtual camera angle.

Figure 1 shows schematically an example of a colour image and depth image of the scene captured by the camera 104 at a first position and orientation. In Figure 1, a single camera is shown for simplicity. However, as noted above, there may be in fact two cameras (colour and depth respectively) or a single colour camera. In Figure 1, the colour and depth images are said to have been captured from a first viewpoint. From this viewpoint, the image corresponds to a face-on view of the user.

In Figure 1, the camera 104 is also shown at a second position and orientation, corresponding to a second viewpoint of the scene. The second viewpoint corresponds to a behind-view of the user, as can be seen in the colour and depth images 106B captured for that viewpoint.

Figure 1 also shows the camera 104 as having a third position and orientation relative to the user, corresponding to a third viewpoint of the scene. This third viewpoint corresponds to a profile view of the user, as indicated by the colour and depth images 106C captured by the camera, for that viewpoint.

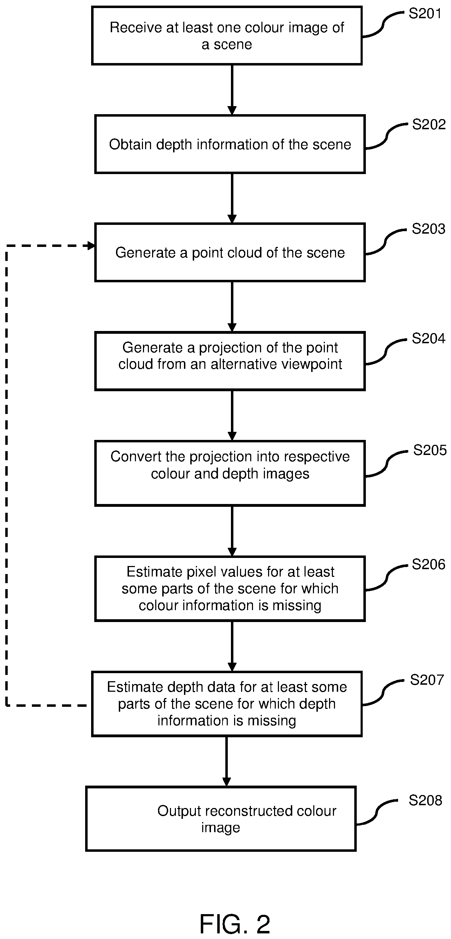

In Figure 1, the camera is shown with a dashed line to indicate that this is a viewpoint for which a reconstruction of the scene is desired. That is, a colour and depth image has not been captured from this position. In Figure 1, a colour and depth image of the scene from this viewpoint may be reconstructed, using one or more of the first and second colour-depth image pairs. The method for doing so will now be described in relation to Figure 2.

It will be appreciated that, the positions of the camera 104 in Figure 1 are just illustrative and that in reality, the differences in position need not be so large. In one example, a user may move their camera 104 around an object (such as a user 102), with the reconstruction being performed as the user obtains an increasing number of colour and depth images of the object.

In another example, colour and depth images may be captured as the user moves the object relative to the camera (e.g. by rotating the object in front of the camera). In this case, the colour and depth images may be captured for a different respective viewpoint of the object, with each respective viewpoint corresponding to a different orientation of the object relative to the camera. In yet a further example, a plurality of different colour and depth cameras may be used, with each being arranged to capture a colour and depth image of an object from a respective perspective. Any combination of these examples may be used for obtaining colour and depth images of an object.

In most cases, the manner in which the camera(s) are positioned or moved will depend on the nature of the scene and object or objects being captured. Generally, it is expected that fewer colour and depth images will need to be captured for symmetrical objects compared with asymmetrical objects. This is because for symmetrical objects, it should be possible to infer the missing parts from the overall geometry of the object. For asymmetrical objects, it may be necessary to capture at least some colour and depth information of the part giving rise to the asymmetry.

Figure 2 illustrates an example of a method for performing reconstruction in accordance with the present invention.

At a first step S201, at least one colour image of the scene is received. The at least one colour image is captured by a colour camera, from a respective viewpoint. The viewpoint may correspond to the first viewpoint shown in Figure 1 (corresponding to colour-depth image pair 106A). The colour image may be received at a processor of a computing device that includes the colour camera, or a separate computing device that is in communication with the colour camera. The colour image defines colour information (i.e. in the form of colour pixels) for a plurality of points in the scene within the field of view of the colour camera. The colour image may be for example, an RGB image, or YUV image.

At a second step 5201, depth information of the scene is obtained for a portion of the scene that corresponds with the portion for which the colour image was captured. As mentioned above, the depth image may not cover the same field of view as the colour camera, but will at least substantially overlap in the extent of the environment that is within the depth camera's field of view. In some examples, the colour image may be cropped to match the extent of the depth image (or vice versa). For example, if the depth image leaves a 5% border with the colour image, or only covers the leftmost 85% of the colour image, then the colour image may be cropped accordingly. The colour and depth image so cropped as to cover the same extent of the environment may then form the colour-image depth pair that is to be subsequently processed (as described below, in relation to step S202).

The depth image may be captured with a depth camera, or, as described previously, may be obtained by analysing a stereoscopic image of the scene. The depth image comprises depth information defining a relative depth of a plurality of points (i.e. depth pixels) in the scene. In some examples, the colour image and depth image may form an RGB-D image.

At a third step S203, a point cloud of the scene is generated based on the at least one colour image and the depth image. This may involve applying an inverse projection to the colour and depth images. The term 'inverse' here describes the mapping of points (i.e. pixels) in the 2D colour and depth images to points in a 3D coordinate system (whereas conventionally, a camera matrix is used to transform points in the 3D real-world into the 2D image plane). The point cloud may be considered as a partial point cloud in that the number of points in the point cloud will be limited by the number of captured colour and depth images, and the viewpoint from which those colour and depth images have been captured. For example, in the example shown in Figure 1, the point cloud generated from colour-depth image pairs 106A and 106B will have a limited number of points representing the user 102 from the profile view.

The inverse projection may be determined using the coordinates of the pixels in the colour and depth images and the focal length of the colour camera, optionally in conjunction with information about the position and orientation of the or each camera. This may involve, for example, determining a correspondence between pixels in the at least one colour image with pixels in the corresponding depth image, such that the depth pixels define z-values for at least some of the colour pixels in the colour image. The colour pixels in the colour image plane may then be mapped to coordinates in 3D space, based on the focal length of the colour camera and the depth information known for at least some of the colour pixels. In this way, a point cloud representing the x-, y- and z- coordinates of a plurality of points in the 3D scene can be generated from the respective colour and depth images of the scene. In the example shown in Figure 1, this may correspond to generating a point cloud of the user from one or more of the first and second colour-depth image pairs 106A, 106B.

In one example, a pinhole camera model may be used for determining the inverse projection. For example, if the x-coordinate of a colour pixel in the image plane is defined as $B_x$, the corresponding depth pixel defined as $A_z$, the focal length of the colour camera defined as $F$, then the coordinate of the colour pixel in 3D space, $A_x$, may be approximated (using geometry of the system) by the equation:

$$A_x = \frac{B_x A_z}{F}$$

The same formula may be used for determining the y-coordinate of the colour pixel in 3D space (due to symmetry of the system). Naturally, the pinhole model may be suitably adapted to take into account any optical elements within the colour and / or depth cameras, and the different poses and focal lengths of the respective cameras (should separate cameras be used).

In some embodiments, steps S201 and 5202 may involve capturing a plurality of colour and depth images, with each colour and depth image pair being captured from a different respective viewpoint. Step 203 may then involve generating a point cloud from the multiple colour-depth image pairs. In these embodiments, the inverse projection maps each colour and corresponding depth pixel in the colour and depth images to a point in a common 3D coordinate system. Generating the point cloud in this way may be desirable because it means that there is less of the scene that requires reconstruction. Similarly, it also means that there is more colour and depth information available from which the reconstruction of the scene can be based. Naturally, the number of colour and depth images to be captured should be fewer than would typically required, as will become apparent from the embodiments further described herein.

At a fourth step S204, a projection of the point cloud is generated from an alternative viewpoint, the viewpoint being different from the viewpoint from which the at least one colour image and depth image were captured. In the example shown in Figure 1, this may involve generating a projection of the point cloud corresponding to the third viewpoint, for which a colour and depth image has not been captured. Generally, the alternative viewpoint will include parts of the scene for which there is no colour and depth information because those parts of the scene were occluded in the previously captured colour image(s) and depth image(s).

At a fifth step S205 the projection of the point cloud from the alternative viewpoint is converted into respective two-dimensional colour and depth images.

These colour and depth images are referred to herein as being 'sparse' colour and depth images because it is expected that there will be regions within these images with a low colour / depth pixel density, due to those parts of the scene being occluded in the previously captured colour and depth images.

The sparsity of the colour and depth images will generally depend on the extent of the change in viewpoint. If only a single colour and depth image pair has been captured, then ideally, the change in viewpoint should be less than 90 degrees (i.e. side on view) of the initial viewpoint. This is because the colour and depth images will contain fewer and fewer pixels as the viewpoint approaches 90 degrees (where e.g. a 2D surface will appear as line). The fewer the pixels in the colour and depth images, the less accurate the reconstruction is likely to be. In examples where multiple colour-depth image pairs have been captured, the alternative viewpoint should correspond to a viewpoint that is different from, but between, the viewpoints for which each of the colour-depth image pairs were captured.

The sparse colour and depth images are generated by projecting the projection of the point cloud into a 2D image plane. The sparse colour image defines the colour values (e.g. R, G, B or Y, U, V) for each point in the 2D image plane; the depth image defines the depth values for each point in the 2D image plane.

At a sixth step S206, colour information (i.e. colour pixel values) is estimated for at least some of the scene in the sparse colour image for which there is no colour information. That, is an in-painting operation is performed on the parts of the scene for which colour information is missing. This results in a more complete colour image of the scene being reconstructed, for the alternative viewpoint. It should be noted that the in-painting operation may only be performed for some parts of the scene, i.e. those parts where the in-painting operation is likely to be accurate.

In some examples, the in-painting operation may involve inputting the sparse colour image to a trained machine learning model, where the machine learning model is trained to estimate colour pixel values for incomplete parts (so-called 'holes') of an image. The machine learning model may be trained with complete and incomplete colour image pairs, using, for example, a fully convolutional network model. An example of such a technique that may be used is described in 'Globally and Locally Consistent Image Completion', Satoshi Iizuka et al., Waseda University, pages 107:1 - 107: 14which is incorporated herein by reference.

In additional or alternative examples, a different technique may be used for performing the in-painting operation. This may include, for example, performing morphological dilation on the sparse colour image. As is known in the art, morphological dilation may be used to add pixels to the boundaries of objects within an image.

In yet further or alternative examples, simple interpolation may be used to fill-in the parts of the image for which colour pixels are missing, based e.g. on an average colour of the nearest neighbouring pixels. In some cases, this interpolation may only be used if the pixel density of the sparse colour image is higher than a threshold density. This ensures that colour information is only estimated for parts of the image where existing colour information is likely to be relevant.

At a seventh step S207, depth information is estimated for at least some parts of the scene for which depth information is missing. In other words, a depth in-painting operation is performed on the sparse depth image. This results in the reconstruction of a more complete depth image of the scene from the alternative viewpoint.

In some embodiments, the depth in-painting operation is performed based on the reconstructed colour image and the existing depth information for the scene (i.e. the depth image obtained at step S202).

This may involve, for example, training a deep network, such as a neural network, to detect surface normals and occlusion boundaries in a colour image. The deep network may be trained with a large number of colour images in which surface normals and occlusion boundaries are labelled, such that the network can learn image features that correspond with surface normals and / or occlusion boundaries. Once trained, the reconstructed colour image may be input to the deep network, in order to detect any surface normals and occlusion boundaries in the reconstructed image.

The surface normals and occlusion boundaries detected by the deep network may be used with the existing depth information to guide a global optimization process. The global optimization process ensures that the estimated depth information: (i) respects the detected surface normals; (ii) is smooth in all of the points that do not belong to an occlusion boundary; and (iii) remains close in value to the existing depth values for the scene. An example of such a deep network and global optimization process is outlined in 'Deep Depth Completion of a Single RGB-D Image', Y. Zhang, T. Funkhouser, Hiroshi Ishikawa, Princeton University, pages 1-11.

In other examples, the depth information may be estimated using e.g. Markovian image synthesis or by extrapolating boundary surfaces and interpolating between them, as is known in the art (see e.g. 'Depth image enhancement using local tangent plane approximations', K . Matsuo and Y.B Yang, Department of Integrated Design Engineering, Keio University).

As is known in the art, a surface normal defines a vector that is perpendicular to a point on a surface. If a surface is flat (e.g. in the x-y plane) then the surface vectors will point in the same direction (the z-direction). This means, for example, that if a surface is detected as being parallel to the depth sensor, then the points on that surface should have the same relative distance from the depth sensor. More generally, the surface normals provide an indication of an orientation of a surface in the scene relative to the depth camera, and the distance of at least some points on this surface. From this, interpolation can be used to estimate depth data for the parts of the scene for which depth data is missing (i.e. filling in the holes).

Occlusion boundaries define the edges of detected objects, behind which other objects would be occluded. The occlusion boundaries provide an indication of where within a scene changes in depth occur, and thus can be used, along with the surface normals, to estimate depth information for different parts of the scene.

It will be appreciated that, whilst the use of a deep network is provided above an example, other methods for detecting surface normals and occlusion boundaries in images may be employed by the present invention.

At step S208 the reconstructed colour image is output for display. In some examples, the reconstructed colour image may be stored in memory for display at a later time. The outputting of the colour image may involve outputting the reconstructed colour image for display at a display device.

Step S208 may also involve outputting the depth image for display, for example, as a grey scale image in which the darkness of the pixels indicates how close or far from the depth sensor, points (both captured and simulated) are from the camera. This may be useful for information purposes. More generally, the reconstructed depth image may be used to ensure that objects in the reconstructed colour image are displayed with the correct occlusion. For example, if a virtual object is to be superimposed over the reconstruct colour image, the depth image can be used to ensure that the virtual object respects any surfaces / objects in the scene, and their corresponding depths.

It will be appreciated that, in some cases, the combination of captured and estimated colour and depth information may be insufficient for accurately reconstructing a colour image (and depth image) of the scene from the alternative viewpoint. That is, there may still be relative large holes in the reconstructed colour and depth images. In these cases, it may be necessary to capture another colour and depth image of the scene (from a different viewpoint), in order to obtain a more complete point cloud from which the reconstruction can be generated.

In some embodiments, the reconstructed colour and depth images may be used to perform further reconstruction of the scene. That is, the method may be performed iteratively, with each successive reconstructed colour and depth image being used to generate a more complete point cloud. For each iteration, step S204 may involve generating a projection of the more complete point cloud from a further alternative viewpoint. In other words, from a viewpoint that is different from the viewpoints for which colour and depth images have been captured and for which colour and depth images have been reconstructed. In this way, the density of points in the point cloud can be built up until a sufficient number of points have been obtained to render a complete colour and depth image of the scene, from a desired viewpoint.

In some examples, the iterative method may continue until the pixel density of the reconstructed colour and depth images exceeds a threshold pixel density.

In more sophisticated examples, the method may involve an additional step, e.g. step S208B (not shown) that involves determining an error associated with the reconstructed colour and depth images. The error associated with a reconstructed colour and depth image pair may be used to determine whether or not to perform a subsequent iteration of the method. For example, no further iteration may be performed when the error associated with a reconstructed colour and depth image pair is less than a threshold value (indicating e.g. that a viewer is unlikely to notice that the a colour image is in fact a reconstruction). In some examples, no further iteration may be performed if a threshold number of iterations have already occurred, and the error associated with a current reconstructed colour and depth image exceeds the threshold value. This may correspond to the case where the error becomes unbounded.

In some examples, the method may be specialised for reconstructing particular kinds of objects or scenes. For example, the method may be designed for reconstructing colour and depth images of human faces. A scan (including colour and depth images) of a human face may be captured before the method is initiated and used to define a ground truth. Each reconstructed colour and depth image may then be compared against the scan of a human face, and an error determined based on this comparison. In determining this error, the pose of the camera may be used to generate a perspective of the scan from the same position and orientation of the camera(s) that captured the colour and depth images. Once determined, the error may be compared against the threshold value, in order to determine whether the reconstructed colour and depth images have deviated too far from the ground truth. Generally, the threshold value should be large enough to allow for differences inherent in different human faces, but not so large so as to allow for objects other than human faces to be deemed to have an acceptable associated error.

In other examples, the error may be determined based on a comparison of the point cloud (including points having arisen from the reconstruction) with a reference point cloud representing a generic human face.

Generally speaking, the error may be determined based on an assumption made about the object being captured. This assumption may include e.g. a shape or smoothness of the object being captured. The error associated with the reconstructed colour and depth images may therefore be determined based on a deviation between an assumed characteristic of the object and the characteristic of the object that can be inferred from the reconstructed colour and depth images.

The method described in relation to Figure 2 is highly flexible in that it allows parts of a scene to be reconstructed, without requiring a user to capture an excessive number of colour and depth images of the scene from different viewpoints.

In some examples, the method described herein may be extended to take into account additional information such as semantic information. For example, in completing an image of a person, information about what the person looks like can be added as a priori, and taken into account when reconstructing an image of the person from the desired viewpoint.

In further examples, the reconstruction may be performed as and when it is needed. For example, if a user moves their camera around an object, new data can be generated in real time to fill any gaps in the user's view.

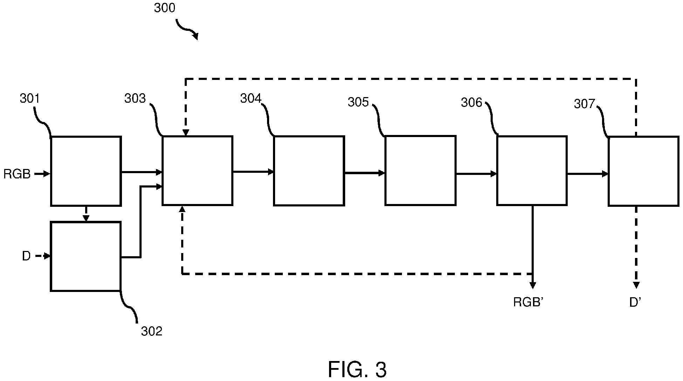

Figure 3 illustrates a system 300 for reconstructing colour and depth images in accordance with the present invention.

The system 300 comprises a receiving unit 301 for receiving at least one colour image of a scene. In Figure 3, the at least one colour image is indicated as input 'RGB'. As described previously, the at least one colour image is captured from a respective viewpoint by a colour camera (the viewpoint corresponding to the field of view of the colour camera).

The receiving unit 301 may be located at a computing device that is in communication with, or includes, the colour camera. The computing device may be e.g. personal computer (PC), laptop, tablet, smartphone, etc. In some examples, the computing device may be e.g. a games console.

The system 300 further comprises a depth unit 302 operable to obtain a depth image for a portion of the scene corresponding to the portion captured in the colour image. The depth unit 302 may be configured to receive a depth image from a depth camera, as indicated by input 'D' in Figure 3. Alternatively, the depth unit 302 may be configured to generate a depth image from a stereoscopic image, indicated by the dashed arrow linking the receiving unit 301 to the depth unit 302. The depth camera may correspond to any of the depth cameras described previously. Again, the colour and depth cameras may be separate, or incorporated into a single device.

The system 300 also comprises a point cloud generator 303 configured to receive colour-depth image pairs and to generate a point cloud from the received colour-depth image pairs. The point cloud generator 303 is configured to apply an inverse projection to the colour and depth pixels in the received colour and depth images. As described previously, the inverse projection maps colour pixels and corresponding depth pixels to a common 3D coordinate system 300. This mapping enables a point cloud of the scene to be generated from the received colour and depth images.

In some examples, the point cloud generator 303 is configured to receive information indicating the pose and focal length of the colour (and optionally, depth) cameras. This information may be provided by the colour (and depth) cameras as metadata in the colour (and depth) images. The point cloud generator 303 may then determine the inverse projection, based on the received metadata. This is desirable since it allows changes in the position and focal length of the colour and depth cameras to be taken into account, when determining the inverse projection.

In Figure 3, the point cloud unit is shown as providing an input to a projection unit 304. The projection unit 304 is configured to generate a projection of the point cloud from a viewpoint that is different from the viewpoint(s) for which a colour and depth images have been captured. In some examples, this alternative viewpoint may correspond to an arbitrary change in viewpoint. For example, a rotation through +1 degrees of the point cloud.

In some embodiments, the projection unit 304 may be configured to receive an indication of the viewpoints for which each colour and depth image received at the point cloud generator 303, were captured. Based on this, the projection unit 304 may then determine a viewpoint that is different from these known viewpoints. If, for example, two colour-depth image pairs have been received at the point cloud generator 303, then the projection unit 304 may select a viewpoint that lies between the viewpoints associated with each image pair.

In Figure 3, the projection unit 304 is shown as providing an input to a conversion unit 305. The conversion unit 305 is configured to convert the generated projection into respective 2D sparse colour and depth images. As described previously, these images are described as sparse because there will be portions for which colour and depth information is missing. As described before, this information will be missing because the corresponding parts of the scene will have been occluded in the colour and depth images captured from the respective viewpoints.

The conversion unit 305 outputs the sparse colour and depth images to an in-painting processor 306. The in-painting processor 306 is configured to generate colour pixel values for at least some parts of the scene for which colour information is missing. In doing so, the in-painting processor 306 generates a reconstructed colour image of the scene, from the alternative viewpoint. In Figure 3, the reconstructed colour image is shown as one of the outputs of the in-painting processor 306 and indicated as RGB'. This reconstructed colour image may be output for display at a display device (not shown), for example.

In some embodiments, a stereoscopic image pair may be generated from the mono (i.e. reconstructed) colour image. The stereoscopic image may be for viewing at head-mountable display (HMD), with each image being displayed at a different respective display element within the HMD. A first display element may be arranged in front of a user's left eye, and a second in front of the user's right eye. In order to convey depth, each image in the stereoscopic pair may be generated so as to exhibit a lateral displacement relative to one another. The lateral displacement may depend on upon e.g. the simulated lateral separation of two cameras that could have been used to capture the individual images.

In additional or alternative embodiments, the stereoscopic image pair may be generated from two colour images, each corresponding to a different viewpoint of the scene. One or both of these images may include a reconstructed colour image, as described above. The two colour images will generally correspond to two colour images captured from similar viewpoints, but having a relatively small displacement between them (i.e. so that both colour images cover substantially the same field of view).

The in-painting processor 306 may be configured to perform any of the in-painting operations described previously in relation to step S206. The extent of the in-painting may depend on colour pixel density of the sparse colour image. For example, in some cases, it may be that colour information is only estimated for the portions of the image that are in close proximity to existing colour information. For the remaining portions of the sparse colour image, no in-painting may be performed. These parts of the image may be in-painted using further captured colour and depth images, or through further iterations of the method described previously.

The in-painting processor 306 is configured to provide the reconstructed colour image to a depth data generator 307. The depth data generator 307 is configured to generate depth data for at least some parts of the sparse depth image for which depth image is missing, based on the reconstructed colour image. In doing so, the depth data generates a more complete depth image of the scene from the alternative viewpoint.

The depth data generator 307 may be configured to generate depth data using any of the methods described previously in relation to step S207. For example, the depth data may comprise a surface normal estimator operable to estimate surface normals of one or more surfaces in the reconstructed colour image. The depth data generator 307 may also comprise an occlusion boundary detector for detecting one or more occlusion boundaries in the reconstructed colour image. The surface normal estimator and occlusion boundary detector may be in the form of a neural network, as described previously. The surface normals and detected occlusion boundaries may be used with the existing depth data to generate depth data for a part of the scene for which depth information is missing. As described previously, this may involve using the detected surface normals, occlusion boundaries and existing depth data to guide a global optimization process.

The reconstructed depth image may then be output, for e.g. display, by the depth data generator 307. In Figure 3, this is indicated as output D'. However, in some embodiments, the reconstructed depth image need not be output for display, since in general, the colour image will be the image that is more likely to be viewed by a user. The output of the depth image for display is optional, as indicated by the dashed arrow in Figure 3.

In Figure 3, the point cloud generator 303 may be configured to receive the reconstructed colour and depth images. This is indicated in Figure 3 linking the outputs of the in-painting processor 306 and the depth data generator 307 with the point cloud generator 303.

The colour and depth pixels estimated as part of the in-painting and depth data generation may thus be used to add more points to the point cloud. As described previously, this may be used to perform a further iteration of the method, with the projection unit 304 generating a projection of the more complete point cloud, from a further different viewpoint. The projection may then be converted into sparse (but less sparse than the colour and depth images generated for the previous iteration) colour and depth images by the conversion unit 305.

The in-painting and depth data generation operations may then be performed again, using the sparse colour and depth images generated for the current iteration. This feedback loop between the in-painting processor 306 and depth data generator 307 may be repeated until a sufficiently dense (and accurate) point cloud representing the scene is obtained. Once a sufficiently dense point cloud has been obtained, it should be possible to generate a colour and depth image of the scene, from any desired viewpoint. This includes viewpoints for which colour and depth images have not been captured.

As described previously in relation to S207, the number of iterations performed may depend on an error associated with the reconstructed colour and depth images. For example, each reconstructed colour and depth image may be compared against an error value, with the error value providing a measure of perceptual errors or artefacts in the reconstructed images. If, for each successive iteration, the error associated the reconstructed colour and depth images converges to an acceptable value (or range), this may indicate that there is sufficient amount of colour and depth data for reconstructing colour and depth images of the scene. Thus, the iterations may continue until the error associated with a current reconstructed colour and depth image is below or within an acceptable range of the error value. Conversely, if for successive iterations the error diverges from an acceptable value (or range), this may indicate that the reconstruction is not working and that the method should be terminated. In such a case, the error may be said to be unbounded.

It will be appreciated that the receiving unit 301, depth unit 302, point cloud generator 303, projection unit 304, conversion unit 305, in-painting processor 306 and depth data generator 307 may be implemented at a single device or separate devices. In some examples, the components shown in Figure 3 may be included in a computing device that is configured to receive colour images (and optionally, depth images) and to output colour (and optionally, depth) images to a display device. The computing device may be, for example, a personal computer (PC), laptop, games console, server etc.

In examples where machine learning is used for the in-painting and / or depth data generation, the machine learning model (e.g. neural network) may be trained at e.g. a server, and the trained model exported to the in-painting processor and / or depth data generator. It is likely that the in-painting and depth data generation will be the most intensive in terms of the processing required. Hence, in some examples, the in-painting processor 306 and depth data generator 307 may be located at a computing device with more computational power than the computing device at which the other components of the system 300 are located. In such a case, the two computing devices will be in communication with one another (i.e. via a wired or wireless connection).

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the invention.

**Claims**

1.    A method of reconstructing colour and depth information of a scene, the method comprising:

  receiving (S201) at least one colour image of a scene, the at least one colour image being captured from a respective viewpoint;
  obtaining (S202) depth information of the scene for the respective viewpoint;
  generating a point cloud of the scene based on the at least one colour image and the obtained depth information;
  generating (S203) a projection of the point cloud from an alternative viewpoint, the alternative viewpoint being different from the respective viewpoint, and including occluded parts of the scene for which colour and depth information is missing;
  converting (S204) the projection of the point cloud to respective sparse colour and depth images;
  estimating (S206) colour information for at least some of the scene in the sparse colour image for which there is no colour information, thereby reconstructing a more complete colour image of the scene from the alternative viewpoint; and
  estimating, (207) based on the reconstructed colour image and the obtained depth information, depth information for at least some of the scene for which there is no depth information, thereby reconstructing a more complete depth image of the scene from the alternative viewpoint.

2.    A method according to claim 1, wherein estimating the colour information comprises inputting the sparse colour image to a trained machine learning model, the machine learning model being trained with complete and incomplete colour image pairs, and trained to estimate pixel values for incomplete parts of an image.

3.    A method according to claim 2, wherein the machine learning model comprises a fully convolutional network model.

4.    A method according to any preceding claim, wherein estimating the depth information comprises:

  estimating surface normals of one or more surfaces in the reconstructed colour image;
  detecting one or more occlusion boundaries in the reconstructed colour image; and
  estimating the depth information based on the estimated surface normals, the detected occlusion boundaries and the obtained depth information.

5.    A method according to claim 4, comprising inputting the reconstructed colour image to a neural network model, the neural network model being trained to estimate surface normals and occlusion boundaries in colour images; and
  wherein estimating the depth information comprises using the estimated surface normals, detected occlusion boundaries and the obtained depth information to guide a global optimization process.

6.    A method according to any preceding claim, wherein generating the point cloud comprises applying an inverse projection to the at least one colour image and obtained depth information.

7.    A method according to any preceding claim, comprising:

  receiving a plurality of colour images, each colour image being captured from a different respective viewpoint;
  obtaining depth information for each of the respective viewpoints;
  generating the point cloud based on the plurality of captured colour images and the obtained depth information;
  generating a projection of the point cloud from an alternative viewpoint, the alternative viewpoint being different from each of the respective viewpoints and including occluded parts of the scene for which colour and depth information is missing;

converting the projection of the point cloud to respective sparse colour and depth images;

estimating colour information for at least some of the scene in the sparse colour image for which there is no colour information, thereby reconstructing a more complete colour image of the scene from the alternative viewpoint; and

estimating, based on the reconstructed colour image and the obtained depth information, depth information for at least some of the scene for which there is no depth information, thereby reconstructing a more complete depth image of the scene from the alternative viewpoint.

8. A method according to any preceding claim, comprising successive reconstructions of colour images and depth images;

wherein the step of receiving at least one colour image of a scene comprises receiving a previously reconstructed colour image, and the step of obtaining depth information of a scene comprises receiving previously reconstructed depth image.

9. A method according to claim 8, comprising:

determining an error associated with the reconstructed colour and depth images; and

wherein successive reconstructions of colour and depth images end when either (i) the error associated with a current reconstructed colour image and depth image is below a threshold value, or (ii) a threshold number of successive reconstructions have occurred and the error associated with the current reconstructed colour image and depth image exceeds the threshold value.

10. A computer readable medium having computer executable instructions adapted to cause a computer system to perform the method of any one of the preceding claims.

11. A system for reconstructing colour and depth information of a scene, the system comprising:

a receiving unit (301) configured to receive at least one colour image of a scene, the colour image being captured from a respective viewpoint;

a depth unit (302) operable to obtain a depth image for a corresponding portion of the scene;

a point cloud generator (303) operable to generate a point cloud from the colour image and obtained depth image;

a projection unit (304) configured to generate a projection of the point cloud from a viewpoint that is different from the respective viewpoint;

a conversion unit (305) operable to convert the generated projection into respective sparse colour and depth images, the sparse colour and depth images including occluded parts of the scene for which colour and depth information is missing;

an in-painting processor (306) configured to generate pixel values for at least some parts of the scene for which colour information is missing, thereby generating a reconstructed colour image; and

a depth data generator (307) configured to generate depth data for at least some parts of the scene for which depth data is missing, the depth data being generated based on the reconstructed colour image, thereby generating a reconstructed depth image.

12. A system according to claim 11, wherein the point cloud generator is configured to receive the reconstructed colour image and the reconstructed depth image; and

wherein the projection unit is configured to generate a projection of the point cloud from a further different viewpoint, based on the received colour and depth images, and the reconstructed colour and depth images.

13. A system according to claim 11 or claim 12, wherein the in-painting processor comprises a machine learning model, the machine learning model being trained to generate pixel values for incomplete images; and

wherein the machine learning model is configured to receive the sparse colour image, and in response thereto, generate pixel values for at least some parts of the scene for which colour information is missing.

14. A system according to claim any of claims 11 to 13, wherein the depth data generator comprises:

a surface normal estimator operable to estimate a surface normal of at least one surface in the reconstructed colour image;

an occlusion boundary detector configured to detect an occlusion boundary in the reconstructed colour image; and

wherein the depth data generator is configured to generate depth data based on the at least one estimated surface normal, detected occlusion boundary and existing depth information for the scene.

15. A system according to claim 14, wherein the surface normal estimator and occlusion boundary detector comprise a neural network, the neural networking being trained to estimate surface normals and occlusion boundaries in colour images.

**Patentansprüche**

1. Verfahren zum Rekonstruktion von Farb- und Tiefeninformationen einer Szene, das Verfahren umfassend:

   Empfangen (S201) von mindestens einem Farbbild einer Szene, wobei das mindestens eine Farbbild von einem jeweiligen Blickpunkt aufgenommen wird;
   Erhalten (S202) von Tiefeninformationen der Szene für den jeweiligen Blickpunkt;
   Erzeugen einer Punktwolke der Szene basierend auf dem mindestens einen Farbbild und den erhaltenen Tiefeninformationen;
   Erzeugen (S203) einer Projektion der Punktwolke von einem alternativen Blickpunkt, wobei sich der alternative Blickpunkt von dem jeweiligen Blickpunkt unterscheidet und verdeckte Teile der Szene einschließt, für die Farb- und Tiefeninformationen fehlen;
   Umwandeln (S204) der Projektion der Punktwolke in entsprechende spärliche Farb- und Tiefenbilder;
   Schätzen (S206) von Farbinformationen für mindestens einen Teil der Szene in dem spärlichen Farbbild, für den keine Farbinformationen vorliegen, wodurch ein vollständigeres Farbbild der Szene von dem alternativen Blickpunkt rekonstruiert wird; und
   Schätzen (207), basierend auf dem rekonstruierten Farbbild und den erhaltenen Tiefeninformationen, von Tiefeninformationen für mindestens einen Teil der Szene, für den keine Tiefeninformationen vorliegen, wodurch ein vollständigeres Tiefenbild der Szene von dem alternativen Blickpunkt rekonstruiert wird.

2. Verfahren nach Anspruch 1, wobei das Schätzen der Farbinformationen ein Eingeben des spärlichen Farbbilds in ein trainiertes maschinelles Lernmodell umfasst, wobei das maschinelle Lernmodell mit vollständigen und unvollständigen Farbbildpaaren trainiert wird, und darauf trainiert wird, Pixelwerte für unvollständige Teile eines Bilds zu schätzen.

3. Verfahren Anspruch 2, wobei das maschinelle Lernmodell ein vollständiges Faltungsnetzwerkmodell umfasst.

4. Verfahren nach einem der vorstehenden Ansprüche, wobei das Schätzen der Tiefeninformationen umfasst:

   Schätzen der Oberflächennormalen einer oder mehrerer Oberflächen in dem rekonstruierten Farbbild;
   Erkennen einer oder mehrerer Verdeckungsgrenzen in dem rekonstruierten Farbbild; und
   Schätzen der Tiefeninformationen basierend auf den geschätzten Oberflächennormalen, den erkannten Verdeckungsgrenzen und den erhaltenen Tiefeninformationen.

5. Verfahren nach Anspruch 4, umfassend das Eingeben des rekonstruierten Farbbilds in ein neuronales Netzmodell, wobei das neuronale Netzmodell darauf trainiert wird, Oberflächennormalen und Verdeckungsgrenzen in Farbbildern zu schätzen; und wobei das Schätzen der Tiefeninformationen das Verwenden der geschätzten Oberflächennormalen, der erkannten Verdeckungsgrenzen und der erhaltenen Tiefeninformationen, um einen globalen Optimierungsprozesses zu führen, umfasst.

6. Verfahren nach einem der vorstehenden Ansprüche, wobei das Erzeugen der Punktwolke ein Anwenden einer inversen Projektion auf das mindestens eine Farbbild und die erhaltenen Tiefeninformationen umfasst.

7. Verfahren nach einem der vorstehenden Ansprüche, umfassend:

   Empfangen einer Vielzahl von Farbbildern, wobei jedes Farbbild von einem jeweils unterschiedlichen Blickpunkt aufgenommen wird;
   Erhalten von Tiefeninformationen für jeden der jeweiligen Blickpunkte;
   Erzeugen der Punktwolke basierend auf der Vielzahl der aufgenommenen Farbbilder und den erhaltenen Tiefeninformationen;
   Erzeugen einer Projektion der Punktwolke von einem alternativen Blickpunkt, wobei sich der alternative Blickpunkt von den jeweiligen Blickpunkten unterscheidet und verdeckte Teile der Szene einschließt, für die Farb- und Tiefeninformationen fehlen;
   Umwandeln der Projektion der Punktwolke in entsprechende spärliche Farb- und Tiefenbilder;
   Schätzen von Farbinformationen für mindestens einen Teil der Szene in dem spärlichen Farbbild, für den keine Farbinformationen vorliegen, wodurch ein vollständigeres Farbbild der Szene von dem alternativen Blickpunkt rekonstruiert wird; und
   Schätzen, basierend auf dem rekonstruierten Farbbild und den erhaltenen Tiefeninformationen, von Tiefeninformationen für mindestens einen Teil der Szene, für den keine Tiefeninformationen vorliegen, wodurch ein vollständigeres Tiefenbild der Szene von dem alternativen Blickpunkt rekonstruiert wird.

8. Verfahren nach einem der vorstehenden Ansprüche, umfassend sukzessive Rekonstruktionen von Farbbildern und Tiefenbildern; wobei der Schritt des Empfangens von mindestens einem Farbbild einer Szene das Empfangen eines zuvor rekonstruierten Farbbildes umfasst und der Schritt des Erhaltens von Tiefeninformationen einer Szene das Empfangen eines zuvor rekonstruierten Tiefenbilds umfasst.

9. Verfahren nach Anspruch 8, umfassend:

   Bestimmen eines mit den rekonstruierten Farb- und Tiefenbildern verknüpften Fehlers; und wobei aufeinanderfolgende Rekonstruktionen von Farb- und Tiefenbildern enden, wenn entweder (i) der mit einem aktuellen rekonstruierten Farbbild und Tiefenbild verknüpfte Fehler unter einem Schwellenwert liegt oder (ii) eine Schwellenanzahl aufeinanderfolgender Rekonstruktionen aufgetreten ist und der mit dem aktuellen rekonstruierten Farbbild und Tiefenbild verknüpfte Fehler den Schwellenwert überschreitet.

10. Computerlesbares Medium, das computerausführbare Anweisungen aufweist, die geeignet sind, um ein Computersystem zu veranlassen, das Verfahren nach einem der vorstehenden Ansprüche durchzuführen.

11. System zum Rekonstruieren von Farb- und Tiefeninformationen einer Szene, das System umfassend:

   eine Empfangseinheit (301), die konfiguriert ist, um mindestens ein Farbbild einer Szene zu empfangen, wobei das Farbbild von einem jeweiligen Blickpunkt aus aufgenommen wird; eine Tiefeneinheit (302), die betriebsfähig ist, um ein Tiefenbild für einen entsprechenden Abschnitt der Szene zu erhalten; einen Punktwolkengenerator (303), der betriebsfähig ist, um eine Punktwolke aus dem Farbbild und dem erhaltenen Tiefenbild zu erzeugen; eine Projektionseinheit (304), die konfiguriert ist, um eine Projektion der Punktwolke von einem Blickpunkt, der sich von dem jeweiligen Blickpunkt unterscheidet, zu erzeugen; eine Umwandlungseinheit (305), die betriebsfähig ist, um die Projektion in jeweilige spärliche Farb- und Tiefenbilder umzuwandeln, wobei die spärlichen Farb- und Tiefenbilder verdeckte Teile der Szene einschließen, für die Farb- und Tiefeninformationen fehlen; einen In-Painting-Prozessor (306), der konfiguriert ist, um Pixelwerte für mindestens einige Teile der Szene zu erzeugen, für die Farbinformationen fehlen, wodurch ein rekonstruiertes Farbbild erzeugt wird; und einen Tiefendatengenerator (307), der konfiguriert ist, um Tiefendaten für mindestens einige Teile der Szene zu erzeugen, für die Tiefendaten fehlen, wobei die Tiefendaten basierend auf dem rekonstruierten Farbbild erzeugt werden, wodurch ein rekonstruiertes Tiefenbild erzeugt wird.

12. System nach Anspruch 11, wobei der Punktwolkengenerator konfiguriert ist, um das rekonstruierte Farbbild und das rekonstruierte Tiefenbild zu empfangen; und wobei die Projektionseinheit konfiguriert ist, um eine Projektion der Punktwolke aus einem weiteren, unterschiedlichen Blickpunkt, basierend auf den empfangenen Farb- und Tiefenbildern und den rekonstruierten Farb- und Tiefenbildern zu erzeugen.

13. System nach Anspruch 11 oder Anspruch 12, wobei der In-Painting-Prozessor ein maschinelles Lernmodell umfasst, wobei das maschinelle Lernmodell darauf trainiert wird, Pixelwerte für unvollständige Bilder zu erzeugen; und wobei das maschinelle Lernmodell konfiguriert ist, um das spärliche Farbbild zu empfangen und als Reaktion darauf Pixelwerte für mindestens einige Teile der Szene zu generieren, für die Farbinformationen fehlen.

14. System nach einem der Ansprüche 11 bis 13, wobei der Tiefendatengenerator umfasst:

   einen Oberflächennormalenschätzer, der betriebsfähig ist, um eine Oberflächennormale von mindestens einer Oberfläche in dem rekonstruierten Farbbild zu schätzen; einen Verdeckungsgrenzendetektor, der konfiguriert ist, um eine Verdeckungsgrenze in dem rekonstruierten Farbbild zu erkennen; und wobei der Tiefendatengenerator konfiguriert ist, um Tiefendaten basierend auf der mindestens einen geschätzten Oberflächennormalen, der erkannten Verdeckungsgrenze und vorhandener Tiefeninformationen für die Szene zu erzeugen.

15. System nach Anspruch 14, wobei der Oberflächennormalenschätzer und der Verdeckungsgrenzendetektor ein neuronales Netz umfassen, wobei das neuronale Netz darauf trainiert ist, Oberflächennormalen und Verdeckungsgrenzen in Farbbildern zu schätzen.

## Revendications

1. Procédé de reconstruction d'informations de couleur et de profondeur d'une scène, le procédé comprenant :

   la réception (S201) d'au moins une image en couleur d'une scène, l'au moins une image en couleur étant capturée à partir d'un point de vue respectif ;
   l'obtention (S202) d'informations de profondeur de la scène pour le point de vue respectif ;
   la génération d'un nuage de points de la scène en fonction de l'au moins une image en couleur et des informations de profondeur obtenues ;
   la génération (S203) d'une projection du nuage de points à partir d'un point de vue alternatif, le point de vue alternatif étant différent du point de vue respectif, et comportant des parties occultées de la scène pour lesquelles des informations de couleur et de profondeur sont manquantes ;
   la conversion (S204) de la projection du nuage de points en images en couleur et de profondeur clairsemées respectives ;
   l'estimation (S206) d'informations de couleur pour au moins une partie de la scène dans l'image en couleur clairsemée pour laquelle il n'y a aucune information de couleur, en reconstruisant de ce fait une image en couleur plus complète de la scène à partir du point de vue alternatif ; et
   l'estimation, (207) en fonction de l'image en couleur reconstruite et des informations de profondeur obtenues, d'informations de profondeur pour au moins une partie de la scène pour laquelle il n'y a aucune information de profondeur, en reconstruisant de ce fait une image de profondeur plus complète de la scène à partir du point de vue alternatif.

2. Procédé selon la revendication 1, dans lequel l'estimation des informations de couleur comprend l'entrée de l'image en couleur clairsemée dans un modèle d'apprentissage automatique entraîné, le modèle d'apprentissage automatique étant entraîné avec des paires d'images en couleur complètes et incomplètes, et entraîné pour estimer des valeurs de pixel pour des parties incomplètes d'une image.

3. Procédé selon la revendication 2, dans lequel le modèle d'apprentissage automatique comprend un modèle de réseau complètement convolutif.

4. Procédé selon l'une quelconque revendication précédente, dans lequel l'estimation des informations de profondeur comprend :

   l'estimation de normales à la surface d'une ou plusieurs surfaces dans l'image en couleur reconstruite ;
   la détection d'une ou plusieurs limites d'occultation dans l'image en couleur reconstruite ; et
   l'estimation des informations de profondeur en fonction des normales à la surface estimées, des limites d'occultation détectées et des informations de profondeur obtenues.

5. Procédé selon la revendication 4, comprenant l'entrée de l'image en couleur reconstruite dans un modèle de réseau neuronal, le modèle de réseau neuronal étant entraîné pour estimer des normales à la surface et des limites d'occultation dans des images en couleur ; et
   dans lequel l'estimation des informations de profondeur comprend l'utilisation des normales à la surface estimées, des limites d'occultation détectées et des informations de profondeur obtenues pour guider un processus d'optimisation global.

6. Procédé selon l'une quelconque revendication précédente, dans lequel la génération du nuage de points comprend l'application d'une projection inverse à l'au moins une image en couleur et aux informations de profondeur obtenues.

7. Procédé selon l'une quelconque revendication précédente, comprenant :

   la réception d'une pluralité d'images en couleur, chaque image en couleur étant capturée à partir d'un point de vue respectif différent ;
   l'obtention d'informations de profondeur pour chacun des points de vue respectifs ;
   la génération du nuage de points en fonction de la pluralité d'images en couleur capturées et des informations de profondeur obtenues ;
   la génération d'une projection du nuage de points à partir d'un point de vue alternatif, le point de vue alternatif étant différent de chacun des points de vue respectifs et comportant des parties occultées de la scène pour lesquelles des informations de couleur et de profondeur sont manquantes ;
   la conversion de la projection du nuage de points en images en couleur et de profondeur clairsemées respectives ;
   l'estimation d'informations de couleur pour au moins une partie de la scène dans l'image en couleur clairsemée pour laquelle il n'y a aucune information de couleur, en reconstruisant de ce fait une image en couleur plus complète de la scène à partir du point de vue alternatif ; et
   l'estimation, en fonction de l'image en couleur reconstruite et des informations de profondeur obtenues, d'informations de profondeur pour au moins une partie de la scène pour laquelle il n'y a aucune information de profondeur, en reconstruisant de ce fait une image de profondeur plus complète de la scène à partir du point de vue alternatif.

8. Procédé selon l'une quelconque revendication précédente, comprenant des reconstructions successives d'images en couleur et d'images de profondeur ; dans lequel l'étape de réception d'au moins une image en couleur d'une scène comprend la réception d'une image en couleur précédemment reconstruite, et l'étape d'obtention d'informations de profondeur d'une scène comprend la réception d'une image de profondeur précédemment reconstruite.

9. Procédé selon la revendication 8, comprenant :

la détermination d'une erreur associée aux images en couleur et de profondeur reconstruites ; et

dans lequel des reconstructions successives d'images en couleur et de profondeur prennent fin lorsque soit (i) l'erreur associée à une image en couleur et une image de profondeur reconstruites actuelles est inférieure à une valeur seuil, soit (ii) un nombre seuil de reconstructions successives se sont produites et l'erreur associée à l'image en couleur et à l'image de profondeur reconstruites dépasse la valeur seuil.

10. Support lisible par ordinateur ayant des instructions exécutables par un ordinateur conçues pour amener un système d'ordinateur à mettre en oeuvre le procédé selon l'une quelconque des revendications précédentes.

11. Système permettant de reconstruire des informations de couleur et de profondeur d'une scène, le système comprenant :

une unité de réception (301) configurée pour recevoir au moins une image en couleur d'une scène, l'image en couleur étant capturée à partir d'un point de vue respectif ;
une unité de profondeur (302) fonctionnelle pour obtenir une image de profondeur pour une partie correspondante de la scène ;
un générateur de nuage de points (303) fonctionnel pour générer un nuage de points à partir de l'image en couleur et de l'image de profondeur obtenue ;
une unité de projection (304) configurée pour générer une projection du nuage de points à partir d'un point de vue qui est différent du point de vue respectif ;
une unité de conversion (305) fonctionnelle pour convertir la projection générée en images en couleur et de profondeur clairsemées respectives, les images en couleur et de profondeur clairsemées comportant des parties occultées de la scène pour lesquelles des informations de couleur et de profondeur sont manquantes ;
un processeur de mise en peinture (306) configuré pour générer des valeurs de pixel pour au moins certaines parties de la scène pour lesquelles des informations de couleur sont manquantes, en générant de ce fait une image en couleur reconstruite ; et
un générateur de données de profondeur (307) configuré pour générer des données de profondeur pour au moins certaines parties de la scène pour lesquelles des données de profondeur sont manquantes, les données de profondeur étant générées en fonction de l'image en couleur reconstruite, en générant de ce fait une image de profondeur reconstruite.

12. Système selon la revendication 11, dans lequel le générateur de nuage de points est configuré pour recevoir l'image en couleur reconstruite et l'image de profondeur reconstruite ; et
dans lequel l'unité de projection est configurée pour générer une projection du nuage de points à partir d'un autre point de vue différent, en fonction des images en couleur et de profondeur reçues, et des images en couleur et de profondeur reconstruites.

13. Système selon la revendication 11 ou la revendication 12, dans lequel le processeur de mise en peinture comprend un modèle d'apprentissage automatique, le modèle d'apprentissage automatique étant entraîné pour générer des valeurs de pixel pour des images incomplètes ; et
dans lequel le modèle d'apprentissage automatique est configuré pour recevoir l'image en couleur clairsemée, et en réponse à celle-ci, générer des valeurs de pixel pour au moins certaines parties de la scène pour lesquelles des informations de couleur sont manquantes.

14. Système selon l'une quelconque des revendications 11 à 13, dans lequel le générateur de données de profondeur comprend :

un estimateur de normale à la surface fonctionnel pour estimer une normale à la surface d'au moins une surface dans l'image en couleur reconstruite ;
un détecteur de limite d'occultation configuré pour détecter une limite d'occultation dans l'image en couleur reconstruite ; et
dans lequel le générateur de données de profondeur est configuré pour générer des données de profondeur en fonction de l'au moins une normale à la surface estimée, de la limite d'occultation détectée et d'informations de profondeur existantes pour la scène.

**15.** Système selon la revendication 14, dans lequel l'estimateur de normale à la surface et le détecteur de limite d'occultation comprennent un réseau neuronal, le réseau neuronal étant entraîné pour estimer des normales à la surface et des limites d'occultation dans des images en couleur.

FIG. 1

FIG. 2

FIG. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2933778 A1
- US 2012001902 A1
- EP 3139602 A1


**Non-patent literature cited in the description**

- **WOLINSKY et al.** 3D view synthesis with interview consistency. *Proceedings of 21st ACM International Conference on Multimedia MM'13*, 669-672
- **SATOSHI IIZUKA et al.** Globally and Locally Consistent Image Completion. Waseda University, 107-1, 107-14
- **Y. ZHANG ; T. FUNKHOUSER ; HIROSHI ISHIKAWA**. Deep Depth Completion of a Single RGB-D Image. Princeton University, 1-11
- **K. MATSUO ; Y.B YANG**. Depth image enhancement using local tangent plane approximations. Department of Integrated Design Engineering, Keio University